(19) Europäisches Patentamt
European Patent Office
Office européen des brevets

(11) Veröffentlichungsnummer: **0 133 154**
**B1**

# (12) EUROPÄISCHE PATENTSCHRIFT

(45) Veröffentlichungstag der Patentschrift: **09.03.88**

(51) Int. Cl.[4]: **C 08 G 59/50**, C 08 J 5/24

(21) Anmeldenummer: **84810293.5**

(22) Anmeldetag: **15.06.84**

(54) **Mit einer härtbaren Epoxidharzmatrix imprägnierte Faserverbundmaterialien.**

(30) Priorität: **21.06.83 CH 3390/83**

(43) Veröffentlichungstag der Anmeldung: **13.02.85 Patentblatt 85/7**

(45) Bekanntmachung des Hinweises auf die Patenterteilung: **09.03.88 Patentblatt 88/10**

(84) Benannte Vertragsstaaten: **AT CH DE FR GB IT LI**

(56) Entgegenhaltungen:
**FR - A - 2 238 736**
**GB - A - 1 019 925**
**US - A - 3 728 302**

(73) Patentinhaber: **CIBA-GEIGY AG, Klybeckstrasse 141, CH-4002 Basel (CH)**

(72) Erfinder: **Gruber, Urs, Dr., Hangstrasse 18, CH-4144 Arlesheim (CH)**

**EP 0 133 154 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Es ist bekannt, zur Herstellung von lagerstabilen Prepregs vorreagierte, noch härtbare Epoxidharzgemische, d.h., B-Stufenharze, oder vorverlängerte, also höhermolekulare Epoxidharze zu verwenden. Derartige Harzsysteme sind entweder fest oder hochviskos, so dass zur Imprägnierung von Fasermaterialien mit diesen Harzen organische Lösungsmittel erforderlich sind, oder sie müssen bei erhöhter Temperatur aus der Schmelze auf das Fasermaterial aufgetragen werden. Ausserdem härten solche Harzsysteme erst bei höheren Temperaturen, d.h., über 120°C aus.

Aus der DE-B 2 131 929 ist es ferner bekannt, zur Herstellung von Prepregs als Harz Reaktionsprodukte aus aromatischen Polyglycidyläthern mit einem Gemisch aus Monoaminen und Diaminen und als Härter Dicyandiamid zu verwenden. Auch für dieses Harzsystem benötigt man zur Aushärtung Temperaturen von über 120°C.

Es wurde nun gefunden, dass sich die genannten Nachteile vermeiden lassen, wenn man Fasermaterialien mit einem härtbaren, flüssigen, lösungsmittelfreien Epoxidharz oder Epoxidharzgemisch, das als Härter ein bestimmtes Amingemisch auf Basis von Monoaminen enthält, imprägniert und trocknet. Die auf diese Weise erhaltenen Prepregs sind zwar nur beschränkt lagerbeständig, doch können sie unterhalb von 120°C zu wertvollen Formstoffen voll ausgerüstet werden und sind daher vorteilhaft für die Verarbeitung zusammen mit anderen Materialien, welche Temperaturen über 120°C schlecht vertragen, wie Holz oder bestimmte Kunststoffe, geeignet.

Gegenstand der vorliegenden Erfindung ist somit ein mit einer härtbaren, lösungsmittelfreien Epoxidharzmatrix imprägnierter Faserverbund, enthaltend

(a) ein flüssiges Epoxidharz oder ein flüssiges Epoxidharzgemisch, und als Härtungsmittel ein Gemisch bestehend aus

(b) einem aliphatischen oder cycloaliphatischen primären Monoamin und/oder disekundären Diamin und

(c) einem katalytisch härtenden tertiären Amin wobei in der härtbaren Epoxidharzmatrix pro 1 Epoxidäquivalent des Epoxidharzes (a) 0,15 bis 0,8 Aminwasserstoffäquivalente der Aminkomponente (b) und 0,01 bis 0,1 Mole des tertiären Amins (c) enthalten sind.

Vorzugsweise sind in der zum Imprägnieren geeigneten härtbaren Epoxidharzmatrix pro 1 Epoxidäquivalent 0,2 bis 0,7 Aminwasserstoffäquivalente der Aminkomponente (b) und 0,02 bis 0,06 Mole des tertiären Amins (c) enthalten.

In einer bevorzugten Ausführungsform ist der Faserverbund mit einer Epoxidharzmatrix bestehend aus den Komponenten (a), (b) und (c) imprägniert, wobei die Komponente (b) insbesondere ein primäres Monoamin darstellt.

Als Komponente (a) kommen beispielsweise die flüssigen Epoxidharze auf Basis von Bisphenol A oder F oder auf Basis von Phenolnovolaken oder deren Gemische in jedem Mischungsverhältnis in Betracht. Sie können mit einem reaktiven Verdünner, wie beispielsweise Phenyl- oder Kresylglycidyläther, Butandioldiglycidyläther oder Hexahydrophthalsäurediglycidylester, vorzugsweise in einer Menge von 3–50 Gew.%, bezogen auf die Gesamtmenge der Epoxidharze, oder mit Diglycidylanilin, vorzugsweise in einer Menge von 3–20 Gew.%, bezogen auf die Gesamtmenge der Epoxidharze, gemischt sein. Ferner sind auch Triglycidyl-p-aminophenol und Tetraglycidyl-p,p′-diaminodiphenylmethan, das mit Butandioldiglycid oder Diglycidylanilin gemischt sein kann, geeignete Gemische von Epoxidharzen.

Die genannten Epoxidverbindungen können auch in beliebigen Mischungen untereinander oder mit festen Epoxidharzen, die in der Epoxidharzmischung löslich sind, eingesetzt werden, sofern die Viskosität der Endmischung bei Raumtemperatur kleiner als 4000 mPa.s, vorzugsweise kleiner als 1500 mPa.s ist.

Beispielsweise eignen sich als primäres Monoamin Benzylamin, Cyclohexylamin, Äthanolamin, 2-Äthylhexylamin, 2-Phenyläthylamin, 3-(2-Äthylhexoxy)propylamin, n-Octylamin, 2-Butoxyäthylamin, 2-(2-Hydroxyäthoxy)-äthylamin-1, 3-Isopropoxy-propylamin-1 oder 3-Amino-2,2-dimethyl-propan-1-ol.

Als disekundäre Diamine (b) sind beispielsweise Piperazin, N,N′-Dicyclohexylhexamethylendiamin-1,6 oder N,N′-Bis-(β-cyanoäthyl)-hexamethylendiamin-1,6 geeignet. Die genannten primären Monoamine und disekundären Diamine stellen bekannte Verbindungen dar und sind grösstenteils im Handel erhältlich.

Die tertiären Amine (c), die als katalytisch wirkende Härtungsmittel eingesetzt werden, stellen ebenfalls bekannte, zum Teil im Handel erhältliche Härtungsmittel für Epoxidharze dar. Solche werden beispielsweise von H. Lee und K. Neville im «Handbook of Epoxy Resins«, 1967, Kapitel 9, beschrieben. Neben den dort genannten Verbindungen können auch die in der EP-A 10 018 949 offenbarten oder die bekannten Imidazolverbindungen der Formeln

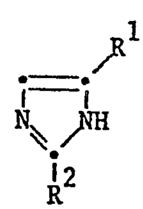 oder 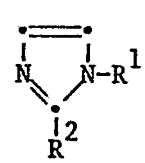 ,

worin $R^1$ und $R^2$ unabhängig voneinander je für ein H-Atom, Methyl, Äthyl oder Phenyl stehen, verwendet werden. Die Imidazolverbindungen der angegebenen Formeln stellen bevorzugte katalytische Härtungsmittel dar. Als Verstärkungsfasern für den erfindungsgemässen Faserverbund können die üblichen bei der Faserverstärkung von Werkstoffen verwendeten Fasern eingesetzt werden. Diese können organische oder anorganische Fasern, Naturfasern oder Synthesefasern sein und in Form von Geweben oder Gelegen, Vliesen oder Matten sowie in Form von Fasersträngen (Rovings), als Stapelfasern oder Endlosfasern vorliegen. Beispielsweise verwendet man als Verstärkungsfasern Glas-, Asbest-, Bor-, Kohlestoff- oder Metallfasern sowie Aramidfasern, hochfeste Polyesterfasern oder Naturfasern aus Baumwolle oder Zellwolle. Solche Fasern und Gewebe daraus sind im Handel erhältlich.

Das Beschichten dieser Fasern bzw. Gewebe mit dem lösungsmittelfreien Epoxidharzgemisch kann nach den üblichen Imprägniermethoden, durch Bestreichen, Besprühen, oder Eintauchen, mittels Strangziehtechnik oder bei Endlosfasern nach dem Präsizionsfaserwicklungsverfahren (filament-winding) erfolgen.

Die mit dem Matrixharz beschichteten Fasermaterialien können an der Luft bei Raumtemperatur getrocknet werden, wobei das Matrixharz allmählich in den noch schmelzbaren bzw. härtbaren B-Zustand umgewandelt wird und man sogenannte Prepregs erhält. Da das zum Imprägnieren verwendete Matrixharz lösungsmittelfrei ist, erübrigt sich ferner vor der Endhärtung der Verfahrensschritt für die restlose Entfernung des Lösungsmittels aus dem Faserverbund, der erforderlich ist, damit im gehärteten Verbundstoff keine Poren bzw. Löcher durch Verdampfen von restlichem Lösungsmittel entstehen.

Die Herstellung von Prepregs aus dem erfindungsgemässen Faserverbund ist daher mit dem Vorteil verbunden, dass weder zum Verdampfen des Lösungsmittels noch zur Vorverlängerung des Harzes die entsprechenden Verfahrensschritte notwendig sind und kein Aufwand an Wärmeenergie erforderlich ist.

Der erfindungsgemässe Faserverbund liegt vorzugsweise in Form von Prepregs vor, die in bekannter Weise zur Herstellung von Laminaten verwendet werden können.

Die erfindungsgemässen Prepregs können bei Temperaturen unterhalb von 120°C voll ausgehärtet werden und sind daher vorteilhaft zur Herstellung von Faserverbundsystemen mit anderen Werkstoffen, insbesondere solchen, die Temperaturen oberhalb von 120°C schlecht vertragen wie Holz oder Kunststoffe mit niedrigem Erweichungspunkt, wie beispielsweise ABS-Polymerisate, Polyäthylen oder PVC, geeignet.

Gegenstand vorliegender Erfindung ist somit auch ein Faserverbundsystem, insbesondere ein Faserverbund-Laminat, das aus dem erfindungsgemässen Faserverbund und gegebenenfalls zusammen mit anderen Werkstoffen unter Formgebung und Vernetzen der Harzmatrix erhalten wird.

Der in den folgenden Beispielen angegebene Harzfluss wird wie folgt bestimmt:

2 quadratische Prepregstücke von z.B. 5 cm Kantenlänge werden gewogen (=G 1), genau aufeinandergelegt, dann zwischen 2 Trennpapieren oder Folien in eine auf 100°C vorgewärmte Presse gelegt. Diese wird sofort bis auf einen Druck von 2 MPa geschlossen. Nach 5 min. wird das so entstandene Laminat der heissen Presse entnommen und das ausgeflossene Harz entlang des Laminatrandes abgeschnitten. Das Laminat wird wieder gewogen (=G 2). Die Gewichtsdifferenz von G 1 zu G 2 in % ausgedrückt ergibt den «Fluss».

Die Brauchbarkeit eines Prepregs wird üblicherweise an Hand seines Flusses bestimmt. Wenn der Fluss zu klein wird, z.B. kleiner als 10%, kann in der Regel ein Prepreg nicht mehr zu einem guten Laminat verpresst werden.

Die Glasumwandlungstemperatur ($T_G$) wird auf einem thermomechanischen Analysator TMA 40 der Fa. Mettler AG, bestimmt. Die Last auf dem eindringenden Stempel beträgt 0,5 N/mm², Aufheizgeschwindigkeit = 10°C/min. Das Gerät bestimmt die $T_G$ vollautomatisch.

In den folgenden Beispielen steht für Aminwasserstoffäquivalent abgekürzt: N-H-Äquival.

Beispiel 1:

Es wird bei Raumtemperatur (RT) in einem Becherglas eine Epoxidharz/Härter-Mischung hergestellt aus
200 g Epoxidharz auf Basis von Bisphenol A mit einem Epoxidgehalt von 5,4 Äquivalenten/kg,
40 g technischen Benzylamin (0,70 N-H-Äquiv./Epoxidäquivalent),
4 g N-Methylimidazol (0,045 Mol/Epoxidäquivalent).

Diese Mischung hat eine für das Imprägnieren von feinen Glas- oder Kohlefasergeweben günstig tiefe Viskosität von 260 mPa.s bei 25°C und eine lange Topfzeit von 6 Stunden (h). Auf einer Polyäthylenfolie wird unidirektionales Glasgewebe (Interglas 92146 der Firma Interglas-Textil) mit dieser Mischung imprägniert und dann mit einer weiteren Folie zugedeckt. Mehrere solche imprägnierte Glasgewebe werden bei RT liegen gelassen, wobei das anfänglich nasse Prepreg innerhalb 16–20 h trocken wird und einen Harzgehalt von ungefähr 40 Gew.% aufweist.

Um die Lagerfähigkeit dieser Prepregs zu bestimmen, wird täglich die Gelierzeit bei 100°C auf einer Heizplatte bestimmt. Ferner werden aus 12 Lagen solcher Prepregs in der Presse bei 100°C, 0,02 MPa und einer Pressdauer von 20 Minuten (min) Laminate hergestellt und deren interlaminare Scherfestigkeit (ILS) nach ASTM-D-2344 am Kurzbiegebalken gemessen.

| Lagerdauer bei RT Tage | Gelierzeit bei 100°C min. | Harzfluss % | ILS MPa | Glasgehalt Gew.% | $T_G$ °C |
|---|---|---|---|---|---|
| 0 | 11 | – | – | – | 83 |
| 0,75 | 3,5 | – | 53,2 | 74,6 | – |
| 2 | – | – | 51,7 | 70,0 | – |
| 3 | 2 | 18,4 | – | – | – |
| 5 | 1,8 | 17,2 | 49,2 | 65,8 | – |
| 7 | 1,35 | 12 | 47,6 | 60,5 | – |

Die Prepregs sind nach bis zu 7 Tagen Lagerung bei RT noch verarbeitbar.

Beispiel 2:

Es wird wie in Beispiel 1 vorgegangen, indem man eine Mischung aus
100 g Epoxidharz gemäss Beispiel 1,
10 g technischem Benzylamin (0,35 N-H-Äquiv./Epoxidäquivalent) und
2 g N-Methylimidazol (0,045 Mol/Epoxidäquiv.)
einsetzt. Da diese Mischung vergleichsweise weniger Benzylamin enthält, ist sie höher viskos (870 mPa.s bei 25°C, hat dafür eine auf 8 h verlängerte Topfzeit und ergibt eine höhere Glasumwandlungstemperatur ($T_G$):

| | Tg |
|---|---|
| nach Härtung 20 min/100°C: | 87°C |
| 60 min/100°C: | 110°C |

Analog Beispiel 1 werden Prepregs und Laminate hergestellt und deren ILS bestimmt.

| Lagerdauer bei RT | ILS nach 20 min/100°C | Glasgehalt |
|---|---|---|
| 0 Tage | 52,6 MPa | 78,8% |
| 2 Tage | 53,6 MPa | 70,2% |
| 5 Tage | 50,4 MPa | 59,4% |

Beispiele 3–9:

Das Benzylamin in den Beispielen 1 und 2 wird durch andere primäre Monoamine ersetzt.

| Beispiel | | 3 | 4 | 5 | 6 | 7 | 8 | 9 |
|---|---|---|---|---|---|---|---|---|
| Epoxidharz | (g) | 100 | 100 | 100 | 100 | 100 | 100 | 100 |
| n-Octylamin | (g) | 15 | | | | | | |
| (N-H-Äquiv./Epoxidäquiv.) | | (0,43) | | | | | | |
| 2-Phenyläthylamin | (g) | | 15 | 15 | 15 | | | |
| (N-H-Äquiv./Epoxidäquiv.) | | | (0,46) | | | | | |
| 3-(2-Äthylhexoxy)-propylamin | (g) | | | | | 20 | | 7 |
| (N-H-Äquiv./Epoxidäquiv.) | | | | | | (0,40) | | (0,14) |
| 2-(2-Aminoäthoxy)-äthanol | (g) | | | | | | 20 | 13 |
| (N-H-Äquiv./Epoxidäquiv.) | | | | | | | (0,71) | (0,46) |
| 2-Phenylimidazol | (g) | | | 2 | | | | |
| (Mol/Epoxidäquivalent) | | | | (0,026) | | | | |
| N-Methylimidazol | (g) | | | | 2 | 2 | 2 | 2 |
| (Mol/Epoxidäquivalent) | | | | | (0,046) | | | |
| RT-Lagerung | | Gelierzeit bei 100°C (min) | | | | | | |
| 0 Tage | | >70 | >70 | 20 | 11 | 14,5 | 6 | 6 |
| 1 Tag | | | | 12 | 2,75 | 5 | 1,5 | 1,5 |
| 4 Tage | | | | 2,25 | 0,7 | 1) | 1) | 1) |
| 5 Tage | | | | 1,8 | | | | |
| 6 Tage | | | | 1,5 | 0,25 | | | |
| 7 Tage | | >70 2) | >70 2) | | | | | |
| Prepreg trocken nach: | (h) | 15 | 15 | 20 | <20 | <20 | <20 | <20 |
| Lagerfähigkeit | (Tage) | >>7 | >>7 | 6 | 3 | 3 | 2 | 2 |

1) geliert
2) geliert nicht

Beispiel 10

Zur Herstellung von Prepregs im B-Zustand, d.h. dem Zustand des Prepregs, wo es nicht mehr nass, sondern eher trocken oder bestenfalls noch leicht klebrig ist, durch kurzes Erwärmen auf eine bestimmte Temperatur, wird eine Mischung eingesetzt aus:
100 g Epoxidharz auf Basis von Bisphenol A mit 5,3 Epoxidäquivalenten/kg,
15 g Benzylamin (0,52 N-H-Äquivalente/Epoxidäquivalent) und
2 g 2-Äthylimidazol (0,04 Mol/Epoxidäquivalent).

Das 2-Äthylimidazol wird zunächst bei 40-50°C im Benzylamin gelöst, dann bei RT ins Epoxidharz eingerührt, wobei die Mischung eine Viskosität von 640 MPa. s bei 25°C und eine Topfzeit (Tecam, 23°C) von 3,5 h aufweist.

Mit dieser Mischung werden Glasgewebe «Typ 92146 der Interglas» imprägniert und in einem Umluftofen vorreagieren gelassen bis zum gewünschten B-Zustand. Dann werden aus 12 Prepreglagen bei 100°C innerhalb 20 min. Laminate gepresst.

| Trocknungsbedingungen 180 Sek. | bei °C | A 129-132 | B 128-130 |
|---|---|---|---|
| Aspekt des Prepregs | bei 20°C | farblos trocken, flexibel | farblos leicht klebrig, flexibel |
| Lagerung des Prepregs | bei 5-10°C (Tage) | 3 | 43 |
| Aspekt nach Lagerung | | flexibel | spröde |
| Gelierzeit | | 4 | |
| ILS | (MPa) | 47,5 | 47 |
| Glasgehalt | (%) | 77,2 | 75 |

Mit dem Prepreg B wird noch die Zugscherfestigkeit (ZSF) in Abhängigkeit der Prepreglagerungsdauer im Kühlschrank bestimmt. Hierzu werden 2 Aluminium-Blechstreifen (Anticorrodal® 100) von 25 mm Breite und 1,5 mm Dicke mittels eines Prepregstückes mit einer Überlappung von 12,5 mm verklebt. Härtung 20 min bei 100°C; Prüfung nach DIN 53283.

| Lagerung d. Prepregs bei 10°C (Tage) | ZSF (MPa) |
|---|---|
| 0 | 8,0 ± 2,5 |
| 7 | 10,0 ± 2,5 |
| 20 | 8,5 ± 2,6 |

Beispiel 11:

Zu 100 g eines Epoxidharzes auf Basis von Bisphenol A mit einem Epoxidgehalt von 5,3 Äquivalenten/kg wird ein Amingemisch aus 15 g Benzylamin (0,53 N-H-Äquivalent/Epoxidäquivalent) und 3 g 2,4,6-Tris-(Dimethylaminomethyl)-phenol (0,021 Mol/Epoxidäquivalent) gegeben und solange miteinander vermischt, bis die Mischung schlierenfrei ist. Mit dieser Harzmischung werden einerseits Aluminiumschälchen von 5 cm Durchmesser mit je 4 g beschickt und andererseits Glasgewebestücke (Interglasgewebe 92146 der Firma Interglas-Textil GmbH/DE) imprägniert.

Die Harzmischungen in den Aluminiumschälchen werden in einem Exsikkator über Silikagel bei Raumtemperatur (RT) gelagert. An diesen Harzmischungen werden periodisch die Gelierzeiten bei 100°C bestimmt.

Die imprägnierten Glasgewebe werden ebenfalls bei RT zwischen zwei Polyäthylenfolien gelagert. An diesen Prepregstücken wird der Fluss bei 100°C bestimmt.

Eine bei 100°C während 30 Minuten gehärtete Harzmischung weist einen $T_G$-Wert von 86°C auf. Ein analog Beispiel 10 unter Verwendung von zwei Aluminium-Blechstreifen und den imprägnierten Glasgewebestücken hergestelltes Laminat, gehärtet bei 100°C während 30 Minuten, weist eine ZSF von 13,6 MPa auf.

| Lagerdauer bei RT (Tage) | Mischungen Gelierzeit bei 100°C (′Minuten, ″Sekunden) | Prepregs Harzfluss bei 100°C (%) | ILS (MPa) |
|---|---|---|---|
| 0 | 9′53″ | | |
| 1 | 3′42″ | 16 | 56,3 |
| 2 | 3′22″ | 19,5 | |
| 4 | 3′14″ | 13,7 | |
| 5 | 3′06″ | | |
| 8 | 2′49″ | | |
| 12 | ~1′ | 9,8 | |

Beispiel 12 und 13

Analog Beispiel 11 werden Prepregs und Laminate hergestellt, wobei anstelle des Amingemisches jetzt Cyclohexylamin und 2-Äthylimidazol eingesetzt werden.

| Beispiel | | 12 | 13 |
|---|---|---|---|
| Epoxidharz | (g) | 100 | 100 |
| Ciclohexylamin<br>(NH-Äquiv./Epoxidäquiv.) | (g) | 9,2<br>(0,36) | 14<br>(0,53) |
| 2-Äthylimidazol<br>(Mol/Epoxidäquivalent) | (g) | 2,6<br>(0,051) | 2,3<br>(0,054) |
| Viskosität der Mischung bei 25°C | (mPa.s) | 1820 | 900 |
| Topfzeit (Tecam*) | (min.) | 326 | 292 |
| RT-Lagerung (über Silikagel) | | Gelierzeit bei 100°C (min, sec) | |
| 0 Tage | | 12′06″ | 13′45″ |
| 1 Tag | | 7′30″ | 9′00″ |
| 5 Tage | | 2′38″ | 4′23″ |
| 10 Tage | | 2′00″ | 4′01″ |
| $T_G$ (TMA 40) nach 1 Tag RT-Lagerung | | | |
| Härtung: 20 Min, 100°C | (°C) | 121 | 114 |
| Härtung: 60 Min, 100°C | (°C) | 124 | 118 |
| Prepregherstellung mit Glasgewebe (92146) | | | |
| Imprägnierung bei RT | | | ausgezeichnet |
| B-Stufe (grifftrocken) bei RT nach (Stunden) | | | 25–27 |
| Harzgehalt | (%) | | 38 |
| Harzfluss bei 100°C nach | | | |
| 1 Tag RT-Lagerung | (%) | | 26 |
| 5 Tagen RT-Lagerung | (%) | | 23,6 |
| ILS nach 1 Tag RT-Lagerung und Härtung bei 100°C während 20 Minuten | | | |
| Glasfaserprepregs | (mPa) | | 51,8 |
| Kohlefaserprepregs | (mPa) | | 20,3 |

* Die Bestimmung der Topfzeit wurde nach Tecam gemäss British Standard 3532 (1967) mit einem Tecam®-Geltimer-Gerät der Fa. Techma Ltd., Cambridge, durchgeführt. Dabei wird die Zeit bestimmt, bis sich ein in 100 g Harz/Härter-Mischung auf und ab bewegender Stempel infolge Gelierung der Masse nicht mehr bewegen kann (Starttemperatur 23°C).

**Patentansprüche**

1. Mit einer härtbaren, lösungsmittelfreien Epoxidharzmatrix imprägnierter Faserverbund, enthaltend

(a) ein flüssiges Epoxidharz oder ein flüssiges Epoxidharzgemisch und als Härtungsmittel ein Gemisch bestehend aus

(b) einem aliphatischen oder cycloaliphatischen primären Monoamin und/oder disekundären Diamin und

(c) einem katalytisch härtenden tertiären Amin,

wobei in der härtbaren Epoxidharzmatrix pro 1 Epoxidäquivalent des Epoxidharzes(a) 0,15 bis 0,8 Aminwasserstoffäquivalente der Aminkomponente (b) und 0,01 bis 0,1 Mole des tertiären Amins (c) enthalten sind.

2. Faserverbund gemäss Anspruch 1, dadurch gekennzeichnet, dass in der härtbaren Epoxidharzmatrix pro 1 Epoxidäquivalent 0,2 bis 0,7 Aminwasserstoffäquivalente der Aminkomponente (b) und 0,02 bis 0,06 Mole des tertiären Amins (c) enthalten sind.

3. Faserverbund gemäss Anspruch 1, dadurch gekennzeichnet, dass die Komponente (b) ein primäres Monoamin ist.

4. Faserverbund gemäss Anspruch 1, dadurch gekennzeichnet, dass die Komponente (c) eine Imidazolverbindung ist.

5. Faserverbund gemäss Anspruch 1, dadurch gekennzeichnet, dass er in Form eines Prepregs vorliegt.

6. Faserverbundsystem, insbesondere Faserverbund-Laminat, hergestellt aus dem Faserverbund gemäss Anspruch 1 und gegebenenfalls anderen Werkstoffen unter Formgebung und Vernetzen der Harzmatrix.

**Claims**

1. A fibre composite impregnated with a curable, solvent-free epoxide resin matrix containing:

(a) a liquid epoxide resin or a liquid mixture of epoxide resins and, as curing agent, a mixture consisting of

(b) an aliphatic or cycloaliphatic primary monoamine and/or disecondary diamine and

(c) a tertiary amine which cures by catalysis, there being present in the curable epoxide resin matrix, for 1 epoxide equivalent of the epoxide resin (a), 0.15 to 0.8 amine hydrogen equivalent of the amine component (b) and 0.01 to 0.1 mole of the tertiary amine (c).

2. A fibre composite according to Claim 1, wherein 0.2 to 0.7 amine hydrogen equivalent of the amine component (b) and 0.02 to 0.06 mole of the tertiary amine (c) are present in the curable epoxide resin matrix for 1 epoxide equivalent.

3. A fibre composite according to Claim 1, wherein the component (b) is a primary monoamine.

4. A fibre composite according to Claim 1, wherein the component (c) is an imidazole compound.

5. A fibre composite according to Claim 1, which is in the form of a prepreg.

6. A fibre composite system, in particular a fibre composite laminate, prepared from the fibre composite according to Claim 1 and, if appropriate, other materials, by shaping and crosslinking the resin matrix.

**Revendications**

1. Composite renforcé par des fibres qui est imprégné d'une matrice à base d'une résine époxydique, durcissable et dépourvue de solvant, et qui contient:

(a) une résine époxydique liquide ou un mélange liquide de résines époxydiques,

et, comme durcisseur, un mélange constitué:

(b) d'une mono-amine primaire aliphatique ou cycloaliphatique et/ou d'une diamine disecondaire et

(c) d'une amine tertiaire durcissant catalytiquement, ladite matrice époxydique durcissable renfermant, par équivalent d'époxy de la résine époxydique (a), de 0,15 à 0,8 équivalent d'hydrogène aminé de la composante (b) et de 0,01 à 0,1 mol de l'amine tertiaire (c).

2. Composite selon la revendication 1 caractérisé en ce que la matrice à base d'une résine époxydique durcissable contient, par équivalent d'époxy, de 0,2 à 0,7 équivalent d'hydrogène aminé de la composante amine (b) et de 0,02 à 0,06 mol de l'amine tertiaire (c).

3. Composite selon la revendication 1 caractérisé en ce que la composante (b) est une monoamine primaire.

4. Composite selon la revendication 1 caractérisé en ce que la composante (c) est un dérivé de l'imidazole.

5. Composite selon la revendication 1 caractérisé en ce qu'il est sous la forme d'un pré-imprégné.

6. Système composite renforcé par des fibres, plus particulièrement stratifié comportant un composite renforcé par des fibres, qui a été fabrique à partir du composite selon la revendication 1 et, éventuellement, d'autres matériaux, cette fabrication étant accompagnée d'un moulage et d'une réticulation de la matrice résineuse.